# EUROPEAN PATENT SPECIFICATION

(11) **EP 4 534 803 B1**
(45) Date of publication and mention of the grant of the patent: **24.06.2026**
(21) Application number: 24204367.7
(22) Date of filing: 02.10.2024
(51) Int. Cl.: F01D 5/28, F01D 5/18, F01D 9/06, C04B 35/80

(54) **AIRFOIL, GAS TURBINE ENGINE AND METHOD OF FABRICATING AN AIRFOIL**
SCHAUFEL, GASTURBINENTRIEBWERK UND VERFAHREN ZUM HERSTELLEN EINER SCHAUFEL
AUBE, MOTEUR À TURBINE À GAZ ET PROCÉDÉ POUR FABRIQUER UNE AUBE

(30) Priority: 04.10.2023 US 202318480692
(43) Date of publication of application: 09.04.2025
(73) Proprietor: RTX Corporation, Farmington, CT 06032 (US)
(72) Inventor: BANHOS, Jonas, Farmington, 06032 (US); ROACH, James T., Farmington, 06032 (US); KIM, Russell, Farmington, 06032 (US); SURACE, Raymond, Farmington, 06032 (US)
(74) Representative: Dehns

(56) References cited:
- US-A1- 2014 271 153
- US-A1- 2017 328 216
- US-A1- 2019 210 929
- US-A1- 2019 330 988

## Description

### TECHNICAL FIELD

The present invention relates to an airfoil, a gas turbine engine and a method of fabricating an airfoil.

### BACKGROUND

A gas turbine engine typically includes a fan section, a compressor section, a combustor section and a turbine section. Air entering the compressor section is compressed and delivered into the combustion section where it is mixed with fuel and ignited to generate a high-pressure and temperature core gas flow. The high-pressure and temperature core gas flow expands through the turbine section to drive the compressor and the fan section. The compressor section may include low and high pressure compressors, and the turbine section may also include low and high pressure turbines.

Airfoils in the turbine section are typically formed of a superalloy and may include thermal barrier coatings to extend temperature capability and lifetime. Ceramic matrix composite ("CMC") materials are also being considered for airfoils. Among other attractive properties, CMCs have high temperature resistance. Despite this attribute, however, there are unique challenges to implementing CMCs in airfoils.

US 2019/210929 A1, US 2019/330988 A1, US 2017/328216 A1 and US 2014/271153 A1 disclose prior art ceramic matrix composite airfoils.

### SUMMARY

According to an aspect of the present invention, there is provided an airfoil according to claim 1.

According to an aspect of the present invention, there is provided a gas turbine engine according to claim 10.

According to another aspect of the present invention, there is provided a method of fabricating an airfoil according to claim 11.

Features of embodiments of the invention are set forth in the dependent claims.

### BRIEF DESCRIPTION OF THE DRAWINGS

The various features and advantages of the present invention will become apparent to those skilled in the art from the following detailed description. The drawings that accompany the detailed description can be briefly described as follows.
Figure 1 illustrates a gas turbine engine.
Figure 2 illustrates a sectioned view of an airfoil section of the engine.
Figure 3 illustrates another view of the airfoil section.
Figure 4 illustrates a view of a cooling passage in the airfoil section.
Figure 5 illustrates a view of another cooling passage in the airfoil section
Figure 6 illustrates a view of the trailing edge of the airfoil section.
Figure 7 depicts a method for fabricating an airfoil section.

Like reference numerals designate like elements where appropriate and reference numerals with the addition of one-hundred or multiples thereof designate modified elements that are understood to incorporate the same features and benefits of the corresponding elements. Terms such as "first" and "second" used herein are to differentiate that there are two architecturally distinct components or features. Furthermore, the terms "first" and "second" are interchangeable in that a first component or feature could alternatively be termed as the second component or feature, and vice versa.

### DETAILED DESCRIPTION

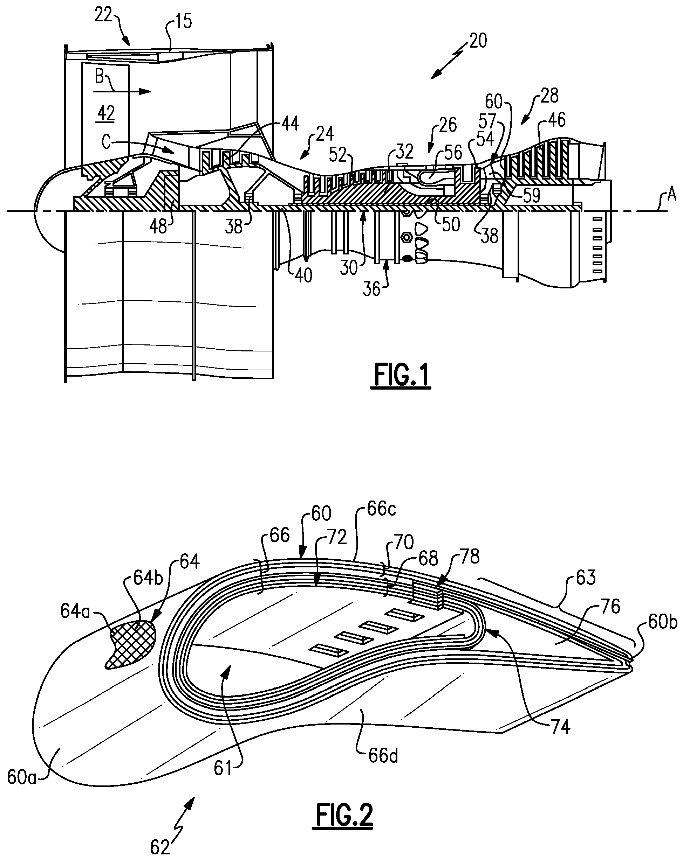

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. The fan section 22 drives air along a bypass flow path B in a bypass duct defined within a housing 15 such as a fan case or nacelle, and also drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects, a first (or low) pressure compressor 44 and a first (or low) pressure turbine 46. The inner shaft 40 is connected to the fan 42 through a speed change mechanism, which in exemplary gas turbine engine 20 is illustrated as a geared architecture 48 to drive a fan 42 at a lower speed than the low speed spool 30. The high speed spool 32 includes an outer shaft 50 that interconnects a second (or high) pressure compressor 52 and a second (or high) pressure turbine 54. A combustor 56 is arranged in the exemplary gas turbine 20 between the high pressure compressor 52 and the high pressure turbine 54. A mid-turbine frame 57 of the engine static structure 36 may be arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded through the high pressure turbine 54 and low pressure turbine 46. The mid-turbine frame 57 includes airfoils 59 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of the low pressure compressor, or aft of the combustor section 26 or even aft of turbine section 28, and fan 42 may be positioned forward or aft of the location of gear system 48.

The engine 20 in one example is a high-bypass geared aircraft engine. In a further example, the engine 20 bypass ratio is greater than about six (6), with an example embodiment being greater than about ten (10), and can be less than or equal to about 18.0, or more narrowly can be less than or equal to 16.0. The geared architecture 48 is an epicyclic gear train, such as a planetary gear system or other gear system, with a gear reduction ratio of greater than about 2.3. The gear reduction ratio may be less than or equal to 4.0. The low pressure turbine 46 has a pressure ratio that is greater than about five. The low pressure turbine pressure ratio can be less than or equal to 13.0, or more narrowly less than or equal to 12.0. In one disclosed embodiment, the engine 20 bypass ratio is greater than about ten (10:1), the fan diameter is significantly larger than that of the low pressure compressor 44, and the low pressure turbine 46 has a pressure ratio that is greater than about five (5:1). Low pressure turbine 46 pressure ratio is pressure measured prior to an inlet of low pressure turbine 46 as related to the pressure at the outlet of the low pressure turbine 46 prior to an exhaust nozzle. The geared architecture 48 may be an epicyclic

gear train, such as a planetary gear system or other gear system, with a gear reduction ratio of greater than about 2.3:1 and less than about 5:1. It should be understood, however, that the above parameters are only exemplary of one embodiment of a geared architecture engine and that the present invention is applicable to other gas turbine engines including direct drive turbofans.

A significant amount of thrust is provided by the bypass flow B due to the high bypass ratio. The fan section 22 of the engine 20 is designed for a particular flight condition -- typically cruise at about 0.8 Mach and about 35,000 feet (10,668 meters). The flight condition of 0.8 Mach and 35,000 ft (10,668 meters), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. The engine parameters described above and those in this paragraph are measured at this condition unless otherwise specified. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45, or more narrowly greater than or equal to 1.25. "Low corrected fan tip speed" is the actual fan tip speed in ft/sec divided by an industry standard temperature correction of [(Tram °R) / (518.7 °R)]^{0.5} (where °R = K x 9/5). The "Low corrected fan tip speed" as disclosed herein according to one non-limiting embodiment is less than about 1150.0 ft / second (350.5 meters/second), and can be greater than or equal to 1000.0 ft / second (304.8 meters/second).

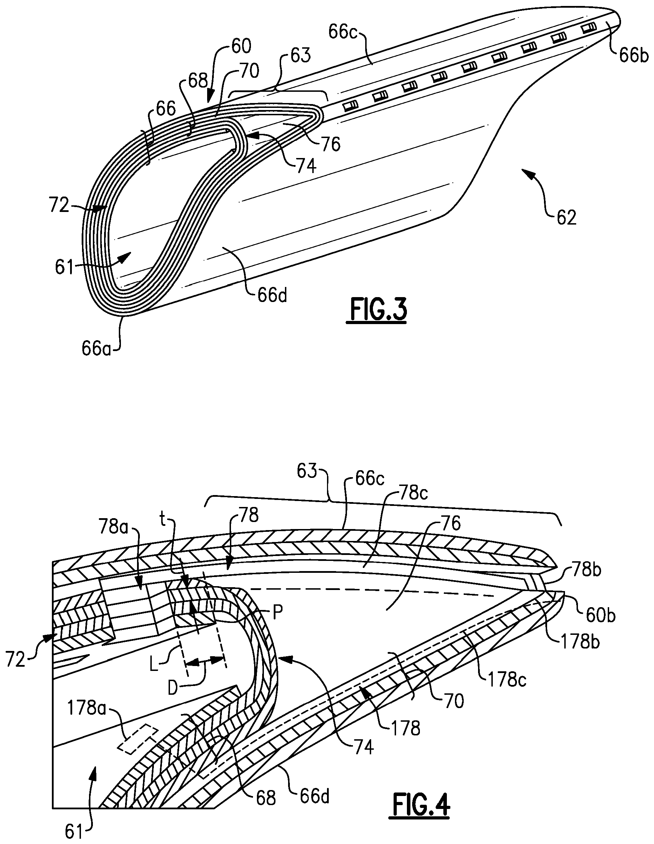

Figure 2 illustrates a sectioned view of an airfoil section 60 through a mid-span region of an airfoil 62, and Figure 3 illustrates the airfoil 62 from a direction aft-looking-forward. For example, the airfoil 62 is a turbine vane from the turbine section 28 of the engine 20, and there are a plurality of turbine vanes arranged in a circumferential row in the turbine section 28. Although not shown, the airfoil 62 can additionally include one or more platforms attached with the airfoil section 60. The airfoil section 60 is hollow and defines an internal cavity 61, a leading edge 60a, a trailing edge region 63 having a trailing edge 66b, a suction side 66c, and a pressure side 66d. The trailing edge region 63 generally refers to the aft portion of the airfoil section 60 and includes the aft portion of the internal cavity 61 and the trailing edge 66b, which is the rear-most edge of the airfoil section 60. Terms such as "first" and "second" are used herein to differentiate that there are two architecturally distinct components or features. It is to be further understood that the terms "first" and "second" are interchangeable in that a first component or feature could alternatively be termed as the second component or feature, and vice versa.

The airfoil section 60 is formed of a ceramic matrix composite (CMC) 64. Referring to the cutaway section in Figure 2, the CMC 64 includes ceramic fibers 64a that are disposed in a ceramic matrix 64b. The CMC 64 may be, but is not limited to, a SiC/SiC composite in which SiC fibers are disposed within a SiC matrix. The ceramic fibers 64a are provided in fiber plies 66 that may be woven or braided and may collectively include fiber plies of different fiber weave configurations.

The fiber plies 66 include core fiber plies 68 and skin fiber plies 70. The core fiber plies 68 define a radial tube 72 that circumscribes and immediately borders the internal cavity 61. The skin fiber plies 70 define the exterior profile of the airfoil section 60 and wrap around the core fiber plies 68 from the pressure side 66d in the trailing edge region 63, through the leading edge 60a, and to the suction side 66c in the trailing edge region 63. In the illustrated example, there are four core fiber plies 68 and three skin fiber plies 70, although it is to be understood that the numbers of core and skin fiber plies 68/70 can be varied.

The radial tube 72 has a radiused end 74 in the trailing edge region 63. Except for the inner-most one of the core fiber plies 68, all of the core fiber plies 68 wrap completely around the internal cavity 61. The inner-most one of the core fiber plies 68 terminates short of the radiused end 74, as the small radius may exceed the capability of the fiber ply to bend without fiber tow distress.

There is a filler element 76 in the trailing edge region 63 aft of the internal cavity 61. A filler element in general is often colloquially referred to as a "noodle" and serves as a non-structural space-filler, usually in an interstice where other fiber plies bend. Here, the filler element 76 fills in the region aft of the radiused end 74, sandwiched between the skin fiber plies 70 on the pressure side 66d and the skin fiber plies 70 on the suction side 66c. The filler element 76 may be formed of, but is not limited to, a bundle of densified ceramic fibers (a CMC) or a monolithic ceramic.

The suction and pressure sides 66c/66d and the trailing edge region 63 may require cooling. In that regard, the airfoil section 60 includes at least one cooling passage 78, but most typically a plurality of cooling passages 78, for a flow of cooling air. For example, the cooling air is bleed air from the compressor section 24 that is provided into the internal cavity 61 and flows from the internal cavity 61 into the cooling passage(s) 78. A sectioned view through one of the cooling passages 78 is shown in an enlarged view in Figure 4 and at least includes a first, inlet orifice section 78a and a second, outlet orifice section 78b. The first section 78a opens to the internal cavity 61 and serves for entry of the cooling air into the passage 78, and the second section extends through the trailing edge 60b, such as along a centerline of the trailing edge 60b, and serves to discharge spent cooling air to the exterior of the airfoil section 60 (into the core gaspath C).

The radiused end 74 of the radial tube 72 is an area that may be under considerable stress in the airfoil section 60. For example, the core fiber plies 68 are under bending stresses from bending at the radius in the radiused end 74, and dynamic stresses on the airfoil section 60 may concentrate at this area due to the bending. Such stresses on a CMC may tend to cause delamination between fiber plies. In this regard, the proposition of using an orifice in the radiused end is undesirable, as it would cause a discontinuity in the ceramic fibers and thereby potentially weaken the CMC in that area. Rather, the first section 78a of the passage 78 is at a location L that is axially forward of the radiused end 74, so as to circumvent the radiused end 74 and thus avoid inclusion of a discontinuity in the radiused end 74. For example, the radiused end 74 is demarked by a location P, at which the core fiber plies 68 begin to bend, and the location L is forward of location P. In one example, in order to provide a margin from the location P, the location L is positioned based on a number N of the core fiber plies 68 and a fiber ply thickness t of the core fiber plies 68. For instance, the location L is forward of location P by a distance D (to the closest edge of the first section 78a) that is greater than the product of N and t. In a further example, in order to ensure an adequate margin from the location P, the distance is a multiple of N, t, and a multiplier X, where X is from five to ten.

The first section 78a extends through the core fiber plies 68. For example, the central axis of the first section 78a is locally substantially perpendicular to the core fiber plies 68 and the skin fiber plies 70, but could alternatively be at a non-perpendicular angle. The cooling passage 78 further includes a third, intermediate section 78c that opens on its forward end to the first section 78a and opens on its aft end to the second section 78b. The third section 78c is substantially straight and of uniform cross-section along its full length, though it could alternatively include turns and/or taper in cross-section upstream-to-downstream or diverge in cross-section upstream-to-downstream, and connects the first and second sections 78a/78b. In this example, each passage 78 has a single inlet (78a) and a single outlet (78b). The third section 78c is bound on its interior side by the filler element 76, on its outer side by one of the skin fiber plies 70 (i.e., an intermediate fiber ply between the inner-most and outer-most skin fiber plies), and on its lateral sides by the inner-most one the skin fiber plies 70.

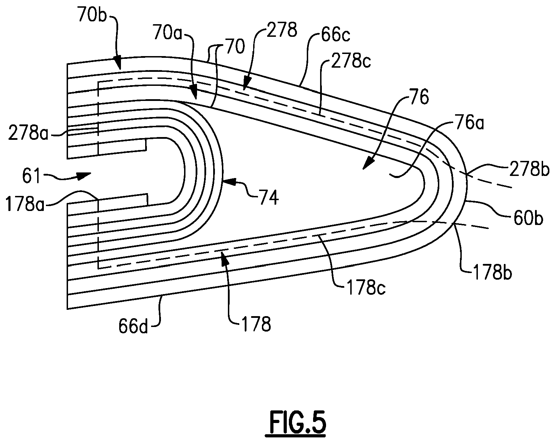

Alternatively, as shown in Figure 5, the filler element 76 includes a filler core 76a and skin fiber plies 70 on the filler core 76a, and the third section 278c of the passage 278 extends through the skin fiber plies 70 such that the skin fiber ply 70a laterally bounds the third section 278c and an outer skin fiber ply 70b bounds the outer side of the third section 278c. The third section 278c opens on its forward end to the first section 278a (inlet) and opens on its aft end to the second section 278b (outlet). Having the third section 278c extend through the skin fiber plies 70 rather than in the filler element 76 may provide a more consistent boundary, whereas filler elements may have difficulty conforming to fill voids especially where the adjacent core and skin fiber plies bifurcate.

In further embodiments, the location L is substantially further forward of location P by a multiple of distance D. In such examples, the third section 78c is longer and thus runs over a longer distance along the suction side 66c (or pressure side 66d), thereby providing additional cooling of the suction side 66c (or pressure side 66d).

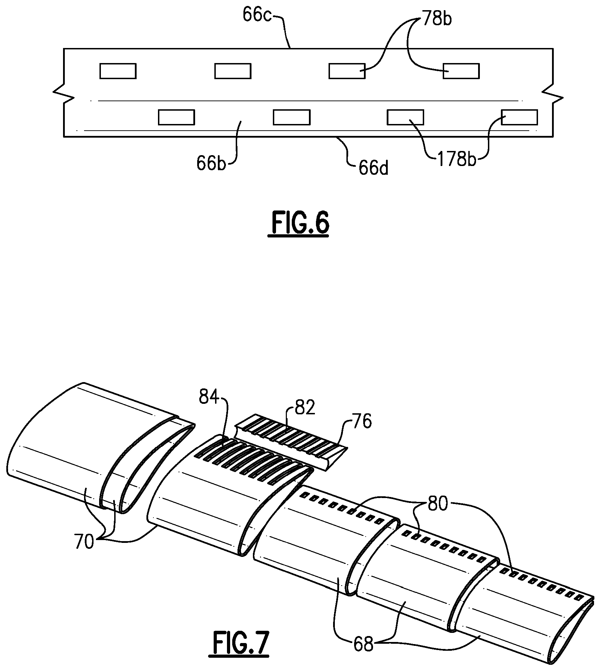

In the prior examples, the first section 78a (and thus the location L) is toward the suction side 66c of the core fiber plies 68 such that the third section 78c of the passage 78 runs along the suction side 66c. However, in additional examples, as depicted in dashed lines in Figure 4, a first section 178a (and thus the location L) of a passage 178 is toward the pressure side 66d of the core fiber plies 68 such that the third section 178c runs along the pressure side 66d to the second section 178b. In a further example, the airfoil section 60 includes passages 78 toward the suction side 66c and passages 178 toward the pressure side 66d. In that case, the passages 78/178 are radially staggered, as represented by the staggered spacing of the second sections 78b/178b in the illustration of the trailing edge 66b in Figure 6.

Figure 7 depicts a method for fabricating the airfoil section 60. Although not limited, the depicted example is based upon a fiber ply lay-up process on which the various core and skin fiber plies 68/70 and filler element 76 are laid-up to form a preform. For example, the core and skin fiber plies 68/70 initially contain no matrix. The core fiber plies 68 are provided with cutouts 80, which may be formed by laser cutting or other suitable technique that does not substantially damage the fibers or result in undesirably uneven cut lines. The core fiber plies 68 are laid-up on a mandrel or other support surface such that the cutouts 80 align to form the first section 78a of the passage 78 of the airfoil section 60. The filler element 76 is then positioned adjacent the core fiber plies 68. For instance, the filler element 76 may be a prefabricated monolithic or CMC piece that has slots 82 provided thereon to form the third section 78c/178c of the passages 78/178. The first of the skin fiber plies 70 is then wrapped around the core fiber plies 68 and the filler element 76. The first skin fiber ply 70 includes through slots 84 that align with the cutouts 80 and the slots 82 to form the lateral bounds of the third section of the passages 78/178. Finally, the remaining skin fiber plies 70 are wrapped around the first skin fiber ply 70, core fiber plies 68, and filler element 76 to form the preform. The preform is then densified with the ceramic matrix to form the CMC. For example, the ceramic matrix is formed by, but not limited to, chemical vapor infiltration (CVI), melt infiltration (MI), a hybrid of CVI and MI, and/or polymer infiltration and pyrolysis (PIP).

The disclosed methodology enables the passages 78/178 to be formed prior to densification. This not only eliminates a need for machining the passages into the final CMC but also enables enhanced densification of the CMC. For instance, densification depends to some extent on the ability of the matrix material or matrix precursor material (i.e., infiltrants) to flow into all depths of the preform during the densification process so that the preform becomes fully densified. In some cases, however, the thickness of the preform can exceed a depth at which the infiltrants can readily flow under practical processing conditions and times and achieve the desired density. As a result, the preform may be only partially densified in some regions, with pores or voids in the regions that the infiltrant cannot reach. The cutouts 80, slots 82, and though-slots 84 provide additional flow paths for the matrix material or matrix precursor material during densification and thereby can enhance densification in regions that may otherwise not be fully densified.

Although a combination of features is shown in the illustrated examples, not all of them need to be combined to realize the benefits of various embodiments of this invention. In other words, a system designed according to an embodiment of this invention will not necessarily include all of the features shown in any one of the Figures or all of the portions schematically shown in the Figures. Moreover, selected features of one example embodiment may be combined with selected features of other example embodiments.

## Claims

1. An airfoil (62) comprising:
an airfoil section (60) defining pressure and suction sides (66c, 66d), a leading edge (60a), and a trailing edge region (63) including a trailing edge (60b), the airfoil section (60) being formed of a ceramic matrix composite (64) that includes fiber plies (66) disposed in a ceramic matrix (64b), the fiber plies (66) including:
core fiber plies (68) defining a radial tube (72) that circumscribes an internal cavity (61), the radial tube (72) having a radiused end (74) in the trailing edge region (63), and
skin fiber plies (70) defining an exterior of the airfoil section (60) and wrapping around the core fiber plies (68) from the pressure side (66d) of the trailing edge region (63), through the leading edge (60a), and to the suction side (66c) of the trailing edge region (63);
a filler element (76) in the trailing edge region (63) aft of the internal cavity (61) and sandwiched between the skin fiber plies (70) on the pressure side (66d) and the skin fiber plies (70) on the suction side (66c); and
at least one cooling passage (78) including:
a first, inlet orifice section (78a) opening to the internal cavity (61) at a location (L) forward of the radiused end (74) and extending through the core fiber plies (68), and
**characterized in that** the at least one cooling passage (78) includes a second, outlet orifice section (78b) extending through the trailing edge (60b).

2. The airfoil (62) as recited in claim 1, wherein the at least one cooling passage (78) includes a third, intermediate section (78c) connecting the first and second sections (78a, 78b), and the third section (78c) is bound by at least one of the skin fiber plies (70) and the filler element (76).

3. The airfoil (62) as recited in claim 2, wherein the filler element (76) includes a filler core (76a) and a filler skin fiber ply (70a) on the filler core (76a), and the filler skin fiber ply (70a) partially bounds the third section (78c).

4. The airfoil (62) as recited in claim 2 or 3, wherein the third section (78c) is bound by at least two of the skin fiber plies (70).

5. The airfoil (62) as recited in any preceding claim, wherein the fiber plies (66) include a number N of the core fiber plies (68) each having a fiber ply thickness t, and the location is forward of the radiused end (74) by a distance D that is greater than the product of N and t.

6. The airfoil (62) as recited in any of claims 1 to 4, wherein the fiber plies (66) include a number N of the core fiber plies (68) each having a fiber ply thickness t, and the location is forward of the radiused end (74) by a distance D that is greater than the product of N, t, and a multiplier X that is from five to ten.

7. The airfoil (62) as recited in any preceding claim, wherein the location (L) is toward the suction side (66c) of the core fiber plies (68).

8. The airfoil (62) as recited in any preceding claim, wherein the at least one cooling passage includes multiple cooling passages (78), for a first portion of the multiple cooling passages (78) the location (L) is toward the suction side (66c) of the core fiber plies (68), and for a second portion of the multiple cooling passages (78) the location (L) is toward the pressure side (66d) of the core fiber plies (68).

9. The airfoil (62) as recited in claim 8, wherein the multiple cooling passages (78) each include a third, intermediate section (78c) connecting the first and second sections (78a; 78b), the third section (78c) of the first portion of the multiple cooling passages (78) extending adjacent the suction side (66c) between at least one of the skin fiber plies (70) and the filler element (76), and the third section (78c) of the second portion of the multiple cooling passages (78) extending adjacent the pressure side (66d) between at least one of the skin fiber plies (70) and the filler element (76).

10. A gas turbine engine (20) comprising:
a compressor section (24);
a combustor (56) in fluid communication with the compressor section (24); and
a turbine section (28) in fluid communication with the combustor (56), the turbine section (28) having airfoils (62) as recited in any preceding claim.

11. A method of fabricating an airfoil (62) that has an airfoil section (60) defining pressure and suction sides (66c, 66d), a leading edge (60a), and a trailing edge region (63) including a trailing edge (60b), the method comprising:
forming a fiber preform by:
laying-up core fiber plies (68) to form a radial tube (72) that circumscribes an internal cavity (61), the radial tube (72) having a radiused end (74) in the trailing edge region (63);
laying-up skin fiber plies (70) to wrap around the core fiber plies (68) to form an exterior of the airfoil section (60), the skin fiber plies (70) wrap from the pressure side (66d) of the trailing edge region (63), through the leading edge (60a), and to the suction side (66c) of the trailing edge region (63);
arranging a filler element (76) in the trailing edge region (63) aft of the internal cavity (61) and sandwiched between the skin fiber plies (70) on the pressure side (66d) and the skin fiber plies (70) on the suction side (66c);
at least one cooling passage (78) being formed in the airfoil section (60) by a first, inlet orifice section (78a) that extends through the core fiber plies (68) and that opens to the internal cavity (61) at a location forward of the radiused end (74), and a second, outlet orifice section (78b) that extends through the trailing edge (60b); and
densifying the fiber preform with a ceramic matrix (64b) to form a ceramic matrix composite (64).

12. The method as recited in claim 11, wherein, prior to the densifying, the core fiber plies (68) and the skin fiber plies (70) contain no ceramic matrix.

## Patentansprüche

1. Schaufel (62), umfassend:
einen Schaufelabschnitt (60), der eine Druck- und eine Saugseite (66c, 66d), eine Vorderkante (60a) und einen Hinterkantenbereich (63) einschließlich einer Hinterkante (60b) definiert, wobei der Schaufelabschnitt (60) aus einem keramischen Faserverbundwerkstoff (64) gebildet ist, der Faserlagen (66) beinhaltet, die in einer Keramikmatrix (64b) angeordnet sind, wobei die Faserlagen (66) beinhalten:
Kernfaserlagen (68), die ein radiales Rohr (72) definieren, das einen inneren Hohlraum (61) umschreibt, wobei das radiale Rohr (72) ein abgerundetes Ende (74) im Hinterkantenbereich (63) aufweist, und
Deckfaserlagen (70), die eine Außenseite des Schaufelabschnitts (60) definieren und die Kernfaserlagen (68) von der Druckseite (66d) des Hinterkantenbereichs (63) durch die Vorderkante (60a) und zur Saugseite (66c) des Hinterkantenbereichs (63) umhüllen; ein Füllelement (76) im Hinterkantenbereich (63) hinter dem inneren Hohlraum (61), das zwischen den Deckfaserlagen (70) auf der Druckseite (66d) und den Deckfaserlagen (70) auf der Saugseite (66c) eingeschlossen ist; und
mindestens einen Kühlkanal (78), beinhaltend:
einen ersten Einlassmündungsabschnitt (78a), der sich zum inneren Hohlraum (61) an einer Position (L) vor dem abgerundeten Ende (74) öffnet und sich durch die Kernfaserlagen (68) erstreckt, und
**dadurch gekennzeichnet, dass** der mindestens eine Kühlkanal (78) einen zweiten Auslassmündungsabschnitt (78b) beinhaltet, der sich durch die Hinterkante (60b) erstreckt.

2. Schaufel (62) nach Anspruch 1, wobei der mindestens eine Kühlkanal (78) einen dritten Zwischenabschnitt (78c) beinhaltet, der den ersten und den zweiten Abschnitt (78a, 78b) verbindet, und der dritte Abschnitt (78c) durch mindestens eines von den Deckfaserlagen (70) und dem Füllelement (76) begrenzt ist.

3. Schaufel (62) nach Anspruch 2, wobei das Füllelement (76) einen Füllkern (76a) und eine Fülldeckfaserlage (70a) auf dem Füllkern (76a) beinhaltet und die Fülldeckfaserlage (70a) den dritten Abschnitt (78c) teilweise begrenzt.

4. Schaufel (62) nach Anspruch 2 oder 3, wobei der dritte Abschnitt (78c) durch mindestens zwei der Deckfaserlagen (70) begrenzt ist.

5. Schaufel (62) nach einem der vorhergehenden Ansprüche, wobei die Faserlagen (66) eine Anzahl N der Kernfaserlagen (68) mit jeweils einer Faserlagendicke t beinhalten und die Position vor dem abgerundeten Ende (74) um einen Abstand D liegt, der größer als das Produkt aus N und t ist.

6. Schaufel (62) nach einem der Ansprüche 1 bis 4, wobei die Faserlagen (66) eine Anzahl N der Kernfaserlagen (68) mit jeweils einer Faserlagendicke t beinhalten und die Position vor dem abgerundeten Ende (74) um einen Abstand D liegt, der größer als das Produkt aus N, t und einem Multiplikator X ist, der von fünf bis zehn reicht.

7. Schaufel (62) nach einem der vorhergehenden Ansprüche, wobei die Position (L) zur Saugseite (66c) der Kernfaserlagen (68) hin liegt.

8. Schaufel (62) nach einem der vorhergehenden Ansprüche, wobei der mindestens eine Kühlkanal mehrere Kühlkanäle (78) beinhaltet, wobei für einen ersten Teil der mehreren Kühlkanäle (78) die Position (L) zur Saugseite (66c) der Kernfaserlagen (68) hin liegt und für einen zweiten Teil der mehreren Kühlkanäle (78) die Position (L) zur Druckseite (66d) der Kernfaserlagen (68) hin liegt.

9. Schaufel (62) nach Anspruch 8, wobei die mehreren Kühlkanäle (78) jeweils einen dritten Zwischenabschnitt (78c) beinhalten, der den ersten und den zweiten Abschnitt (78a, 78b) verbindet, wobei sich der dritte Abschnitt (78c) des ersten Teils der mehreren Kühlkanäle (78) angrenzend an die Saugseite (66c) zwischen mindestens einer der Deckfaserlagen (70) und dem Füllelement (76) erstreckt und sich der dritte Abschnitt (78c) des zweiten Teils der mehreren Kühlkanäle (78) angrenzend an die Druckseite (66d) zwischen mindestens einer der Deckfaserlagen (70) und dem Füllelement (76) erstreckt.

10. Gasturbinentriebwerk (20), umfassend:
einen Verdichterabschnitt (24);
eine Brennkammer (56) in Fluidverbindung mit dem Verdichterabschnitt (24); und
einen Turbinenabschnitt (28) in Fluidverbindung mit der Brennkammer (56), wobei der Turbinenabschnitt (28) Schaufeln (62) nach einem der vorhergehenden Ansprüche aufweist.

11. Verfahren zum Herstellen einer Schaufel (62), die einen Schaufelabschnitt (60) aufweist, der eine Druck- und eine Saugseite (66c, 66d), eine Vorderkante (60a) und einen Hinterkantenbereich (63) einschließlich einer Hinterkante (60b) definiert, wobei das Verfahren umfasst:
Bilden eines Faservorformlings durch:
Schichten von Kernfaserlagen (68), um ein radiales Rohr (72) zu bilden, das einen inneren Hohlraum (61) umschreibt, wobei das radiale Rohr (72) ein abgerundetes Ende (74) im Hinterkantenbereich (63) aufweist;
Schichten von Deckfaserlagen (70), um die Kernfaserlagen (68) zu umhüllen, um eine Außenseite des Schaufelabschnitts (60) zu bilden, wobei die Deckfaserlagen (70) von der Druckseite (66d) des Hinterkantenbereichs (63) durch die Vorderkante (60a) und zur Saugseite (66c) des Hinterkantenbereichs (63) verlaufen;
Anordnen eines Füllelement (76) im Hinterkantenbereich (63) hinter dem inneren Hohlraum (61) und eingeschlossen zwischen den Deckfaserlagen (70) auf der Druckseite (66d) und den Deckfaserlagen (70) auf der Saugseite (66c);
wobei mindestens ein Kühlkanal (78) im Schaufelabschnitt (60) durch einen ersten Einlassmündungsabschnitt (78a), der sich durch die Kernfaserlagen (68) erstreckt und der sich zum inneren Hohlraum (61) an einer Position vor dem abgerundeten Ende (74) öffnet, und einen zweiten Auslassmündungsabschnitt (78b), der sich durch die Hinterkante (60b) erstreckt, gebildet wird; und Verdichten des Faservorformlings mit einer Keramikmatrix (64b), um einen keramischen Faserverbundwerkstoff (64) zu bilden.

12. Verfahren nach Anspruch 11, wobei die Kernfaserlagen (68) und die Deckfaserlagen (70) vor dem Verdichten keine Keramikmatrix enthalten.

## Revendications

1. Surface portante (62) comprenant :
une section de surface portante (60) définissant des intrados et extrados (66c, 66d), un bord d'attaque (60a) et une région de bord de fuite (63) comportant un bord de fuite (60b), la section de surface portante (60) étant formée d'un composite à matrice céramique (64) qui comporte des plis de fibres (66) disposés dans une matrice céramique (64b), les plis de fibres (66) comportant :
des plis de fibres centrales (68) définissant un tube radial (72) qui entoure une cavité interne (61), le tube radial (72) présentant une extrémité arrondie (74) dans la région de bord de fuite (63), et
des plis de fibres de revêtement (70) définissant un extérieur de la section de surface portante (60) et s'enroulant autour des plis de fibres centrales (68) à partir de l'intrados (66d) de la région de bord de fuite (63), à travers le bord d'attaque (60a), et vers l'extrados (66c) de la région de bord de fuite (63) ;
un élément de remplissage (76) situé dans la région de bord de fuite (63) à l'arrière de la cavité interne (61) et pris en sandwich entre les plis de fibres de revêtement (70) de l'intrados (66d) et les plis de fibres de revêtement (70) de l'extrados (66c) ; et
au moins un passage de refroidissement (78) comportant :
une première section (78a) d'orifice d'entrée s'ouvrant sur la cavité interne (61) au niveau d'un emplacement (L) en avant de l'extrémité arrondie (74) et s'étendant à travers les plis de fibres centrales (68), et
**caractérisée en ce que** l'au moins un passage de refroidissement (78) comporte une deuxième section (78b) d'orifice de sortie s'étendant à travers le bord de fuite (60b).

2. Surface portante (62) selon la revendication 1, dans laquelle l'au moins un passage de refroidissement (78) comporte une troisième section (78c) intermédiaire reliant les première et deuxième sections (78a, 78b), et la troisième section (78c) est délimitée par au moins l'un des plis de fibres de revêtement (70) et de l'élément de remplissage (76).

3. Surface portante (62) selon la revendication 2, dans laquelle l'élément de remplissage (76) comporte un noyau de remplissage (76a) et un pli de fibres de revêtement de remplissage (70a) sur le noyau de remplissage (76a), et le pli de fibres de revêtement de remplissage (70a) délimite partiellement la troisième section (78c).

4. Surface portante (62) selon la revendication 2 ou 3, dans laquelle la troisième section (78c) est délimitée par au moins deux des plis de fibres de revêtement (70).

5. Surface portante (62) selon l'une quelconque revendication précédente, dans laquelle les plis de fibres (66) comportent un nombre N de plis de fibres centrales (68) présentant chacun une épaisseur de pli de fibres t, et l'emplacement est situé en avant de l'extrémité arrondie (74) d'une distance D qui est supérieure au produit de N et t.

6. Surface portante (62) selon l'une quelconque des revendications 1 à 4, dans laquelle les plis de fibres (66) comportent un nombre N de plis de fibres centrales (68) présentant chacun une épaisseur de pli de fibres t, et l'emplacement est situé en avant de l'extrémité arrondie (74) d'une distance D qui est supérieure au produit de N et t, et d'un multiplicateur X qui est compris entre cinq et dix.

7. Surface portante (62) selon l'une quelconque revendication précédente, dans laquelle l'emplacement (L) est orienté vers l'extrados (66c) des plis de fibres centrales (68).

8. Surface portante (62) selon l'une quelconque revendication précédente, dans laquelle l'au moins un passage de refroidissement comporte de multiples passages de refroidissement (78), pour une première partie des multiples passages de refroidissement (78), l'emplacement (L) est orienté vers l'extrados (66c) des plis de fibres centrales (68), et pour une seconde partie des multiples passages de refroidissement (78) l'emplacement (L) est orienté vers l'intrados (66d) des plis de fibres centrales (68).

9. Surface portante (62) selon la revendication 8, dans laquelle les multiples passages de refroidissement (78) comportent chacun une troisième section (78c) intermédiaire reliant les première et deuxième sections (78a, 78b), la troisième section (78c) de la première partie des multiples passages de refroidissement (78) s'étendant de manière adjacente à l'extrados (66c) entre au moins l'un des plis de fibres de revêtement (70) et de l'élément de remplissage (76), et la troisième section (78c) de la seconde partie des multiples passages de refroidissement (78) s'étendant de manière adjacente à l'intrados (66d) entre au moins l'un des plis de fibres de revêtement (70) et de l'élément de remplissage (76).

10. Moteur à turbine à gaz (20) comprenant :
une section de compresseur (24) ;
une chambre de combustion (56) en communication fluidique avec la section de compresseur (24) ; et
une section de turbine (28) en communication fluidique avec la chambre de combustion (56), la section de turbine (28) présentant des surfaces portantes (62) selon l'une quelconque revendication précédente.

11. Procédé de fabrication d'une surface portante (62) qui présente une section de surface portante (60) définissant des intrados et extrados (66c, 66d), un bord d'attaque (60a) et une région de bord de fuite (63) comportant un bord de fuite (60b), le procédé comprenant :
la formation d'une préforme de fibre par :
empilage de plis de fibres centrales (68) afin de former un tube radial (72) qui entoure une cavité interne (61), le tube radial (72) présentant une extrémité arrondie (74) dans la région de bord de fuite (63) ;
empilage de plis de fibres de revêtement (70) pour s'enrouler autour des plis de fibres centrales (68) afin de former un extérieur de la section de surface portante (60), les plis de fibres de revêtement (70) s'enroulent à partir de l'intrados (66d) de la région de bord de fuite (63), à travers le bord d'attaque (60a), et vers l'extrados (66c) de la région de bord de fuite (63) ;
disposition d'un élément de remplissage (76) dans la région de bord de fuite (63) à l'arrière de la cavité interne (61) et pris en sandwich entre les plis de fibres de revêtement (70) de l'intrados (66d) et les plis de fibres de revêtement (70) de l'extrados (66c) ;
au moins un passage de refroidissement (78) étant formé dans la section de surface portante (60) par une première section (78a) d'orifice d'entrée qui s'étend à travers les plis de fibres centrales (68) et qui s'ouvre sur la cavité interne (61) au niveau d'un emplacement en avant de l'extrémité arrondie (74), et une deuxième section (78b) d'orifice de sortie qui s'étend à travers le bord de fuite (60b) ; et
la densification de la préforme de fibre avec une matrice céramique (64b) afin de former un composite à matrice céramique (64).

12. Procédé selon la revendication 11, dans lequel, avant la densification, les plis de fibres centrales (68) et les plis de fibres de revêtement (70) ne contiennent pas de matrice céramique.
